# EUROPEAN PATENT APPLICATION

(11) **EP 1 908 355 A1**
(43) Date of publication of application: **09.04.2008**
(21) Application number: 06121672.7
(22) Date of filing: 03.10.2006
(51) Int. Cl.: A23K 1/14, A23J 1/14, B02B 5/02, B02B 5/00

(54) **Reduction of fibre content in fibre-containing oilseeds**

(71) Applicant: Cargill Incorporated, Wayzata MN 55391 (US)
(72) Inventor: Delrue, Rita, 2800 Mechelen (BE); Van De Watering, Cornelis Gerardus, 1980 Eppegem (BE)
(74) Representative: Wilkinson, Stephen John

(57) **Abstract**

The invention relates to processes for the reduction of the fibre content in fibre-containing oilseeds. The reduction in fibre is achieved by employing electrostatic separation and/or sieving-wind sifting separation. The invention also relates to protein- and fibre-enriched fractions of oilseeds obtained according to the processes of the invention, and the use of these fractions in animal feed and food, in particle boards/fibre panels, in the production of protein concentrates and/or isolates and as fuel.

## Description

### Background of the invention

Oilseeds generally contain substantial amounts of fibre. For example rapeseed contains 6 to 16 weight % fibres on dry basis, sunflower kernels normally even up to 19 to 34 weight %. From the standpoint of animal nutrition, the protein components in animal feed should be selected in accordance with physiological nutrition guidelines. For example according to crude fibre content, digestibility/nutrient concentration, fats, fatty acids, and active ingredients, ingredients with antinutritive effect.

Since monogastric animals such as pigs and poultry can process only slight amounts of fibre components, the use of oilseeds with high amounts of fibre is limited. Only after the fibre content has been lowered do some oilseeds meet the requirements for these types of animals in terms of digestibility and nutrient concentration. The critical limit of fibre content is typically considered to be around 6% by weight for feeding pigs, 8% for sows, 4-5% for layers and <4% for meat chicken.

Efforts were therefore undertaken in the industry to devise ways for reducing the amount of fibres in oilseeds. This can be done in principal at two different points during processing of oilseeds: 1) before deoiling and 2) after deoiling of the oilseeds. The aim has been to fractionate oilseeds into a low fibre fraction, for use for monogastric animals, and into a high fibre fraction for other uses.

In EP 1 372 409 B1, it is described that sunflower meal obtained from deoiling of sunflowers can be separated into two fractions, one fraction having a fibre content of >15% and the other one having a protein content of >40% and a fibre content of <10%. This separation was carried out by milling, then sieving, and subsequently wind sifting.

US 3 271 160 describes a process for fractionating deoiled safflower seeds into a finer fraction of higher protein value and into a coarser fraction of lower protein value. This was carried out by first milling the deoiled safflower seeds, then air classifying and subsequent sieving.

In Archives of Animal Nutrition, October 2004, Vol. 58(5), 389-404, the separation of hulls and kernel of rapeseed by electro-magnetic separation after dehulling by a roll-dehuller is mentioned.

In Canadian Agricultural Engineering, Vol. 42, No. 1, Jan/Feb/March 2000, the dehulled canola seeds were fractionated on an aspirator.

US 2003/0136276 A1 discloses a process for separating components of flaxseed. The separation is carried out by air classification and sieving.

It is the object of this invention to provide new and innovative processes to enable to substantially lower the amount of fibre present in oilseed material.

### Summary of the invention

The current invention relates to a process for separating fibre-containing oilseeds into fractions with different fibre content characterised in that the separation is carried out by electrostatic separation and/or by sieving-wind sifting separation, preferably electrostatic separation. Preferably, the oilseeds are deoiled prior to the fibre being separated.

The fibre-containing oilseeds are selected from the group consisting of rapeseed, sunflower, sesame, mustard, soybean, corn germ, flaxseed, and mixtures thereof, preferably rapeseed or sunflower, more preferably rapeseed.

Furthermore, a mechanical treatment can be carried out on the fibre-containing oilseeds. This mechanical treatment is preferably carried out using a mill. More preferably, the mill is selected from the group consisting of hammer mill, impact mill, roller mill, and a combination of these.

A drying step can be carried out on the fibre-containing oilseeds. Furthermore, a fractionating step for separating according to particle size can be carried out. This particle size separation is preferably carried out via sieving.

Furthermore, the moisture content of the fibre-containing oilseeds can be adjusted to the range between 10 and 20% water by weight on dry basis and then tempered at a temperature in the range between 0°C and 100°C, preferably 10°C and 80°C.

Preferably, the electrostatic separation of the fibre-containing oilseeds is carried out using a conductive rotating drum electrostatic separator. More preferably, the electrostatic separation is carried out with a drum tangential speed within the range of 1.5 to 3 meter/second, even more preferably 1.9 to 2.8 meter/second, most preferably 2.3 to 2.4 meter/second. Furthermore, the electrostatic separation is preferably carried out at a voltage within the range of 5 and 40 kilo Volt, preferably in the range of 11 and 28 kilo Volt.

Furthermore, the fibre-containing oilseeds are preferably separated into two or more fractions, of which at least one is a fibre-reduced (protein-enriched) fraction having a 20% or more reduced fibre content compared with the fibre content of the oilseed before separation, more preferably 30%, most preferably 50%.

In a preferred embodiment, wherein the fibre-containing oilseed is deoiled rapeseed, the process comprises the steps:
a) collection of the particle size fraction of the fibre-containing oilseed between 250 µm and 1400 µm, preferably 340 µm and 1000 µm, more preferably 340 µm and 670 µm,
b) mechanical treatment of this fraction,
c) further collection of fraction between 250 µm and 600 µm, preferably 250 µm and 400 µm,
d) drying the fraction of step c) at 60°C for 5 minutes, followed by
e) electrostatic separation and/or sieving-wind sifting separation.

In another preferred embodiment, wherein the fibre-containing oilseed is deoiled rapeseed, the process further comprises between step a) & b) the step of adjusting the moisture content of the particle size fraction of the fibre-containing oilseed to the range between 10 and 20% water by weight on dry basis, and then subsequently tempering at a temperature in the range between 0°C and 100°C, preferably 10°C to 80°C.

The present invention further relates to a protein-enriched oilseed fraction obtainable according to the processes of the present invention.

The present invention further relates to a protein-enriched oilseed fraction wherein the oilseed is deoiled rapeseed and the fibre content is less than 10% by weight on dry basis and the protein content more than 35% by weight on dry basis.

The present invention further relates to a fibre-enriched oilseed fraction obtainable according to the processes of the present invention.

The present invention further relates to a fibre-enriched oilseed fraction wherein the oilseed is deoiled rapeseed and the fibre content is more than 20% by weight on dry basis and the protein content less than 30% by weight on dry basis.

The present invention further relates to the use of the protein-enriched and/or fibre-enriched oilseed fractions, obtained according to the process of the current invention, in animal feed and food.

The present invention further relates to the use of the protein-enriched fractions in aquafeed and/or petfood.

The present invention further relates to the use of the protein-enriched oilseed fractions in feed for non-ruminants and/or ruminants.

The present invention further relates to the use of the fibre-enriched oilseed fractions in feed for ruminants.

The present invention further relates to the use of the fibre-enriched oilseed fractions in particle boards/fibre panels and as fuel.

Furthermore, the invention also relates to the use of the protein-enriched oilseed fractions in the production of protein concentrates and/or isolates.

### Detailed description of the invention

The present invention is concerning a process for separating fibre-containing oilseeds into oilseed fractions with different fibre content characterised in that the separation is carried out by electrostatic separation and/or by sieving-wind sifting separation. Fibres in this context means plant fibres of oilseeds which act as antinutrients in oilseeds and therefore significantly reduce the digestibility of oilseeds. Fibre-containing oilseed in this context means any oilseed or oilseed fraction containing fibre, regardless of whether before or after the electrostatic and/or sieving-wind sifting separation, and regardless of whether before or after the deoiling.

Electrostatic separation or high-tension separation means any means of separation where an electrical field is applied to separate matter based on their difference in charge or polarization. The movement of the charged matter is influenced by the electrical field. There are different methods for charging: contact electrification, conductive induction, and ion bombardment. In contact electrification, particles from dissimilar materials charge each other upon contact, in particular when particles are rubbed together, leading to opposite charges when materials are later separated. In conductive induction, uncharged particles contact a charged surface, where conductive particles assume the polarity and the potential of the surface, whereas non-conductive particles are only polarized. The strongest method of charging particles is by ion bombardment: particles are bombarded by ions of atmospheric gases generated by an electrical corona discharge from a high-voltage electrode. This ionized air then charges the matter/particles. Conductive material will quickly lose its charge to a ground conductor surface, whereas non-conductive material remains charged. The difference in conductivity thereby results in a difference in charge, resulting in different behaviors of materials in an electrical field. A conductive rotating drum separator, also known as corona drum separator, is an example of an apparatus working this way.

Preferably, the electrostatic separation is carried out using a conductive rotating drum separator. Preferably, the electrostatic separation is carried out by using a conductive rotating drum separator with a drum tangential speed within the range of 1.5 to 3 meter/second, even more preferably 1.9 to 2.8 meter/second, most preferably 2.3 to 2.4 meter/second. The voltage of the conductive rotating drum separator is preferably within the range of 5 and 40 kilo Volt, more preferably in the range of 11 and 28 kilo Volt.

Electrostatic separation is employed in various fields such as the production of minerals, the reclamation of valuable materials, and cleaning food products like coffee, sesame or mustard seeds. Up to now, however, this technology has not been applied for the purpose described in the application, namely to separate fibre-containing oilseeds into fractions with different fibre content.

With sieving-wind sifting separation is meant the use of any apparatus that exploits differences of size and density of particles by applying simultaneously sieves and controlled air currents in order to separate the particles. Such an apparatus generally consists of a sieve enclosed in an airtight container with controlled air currents passing through the screen/sieves. The factors affecting this separation are 1) the dimensions of the particles, i.e., their size and shape, and 2) the specific gravity of the particles, i.e., their resistance to airflow. Such apparatuses are generally traded under the name "purifier" on the market place. More general information concerning such purifiers can for example be found in the book "Wheat Flour Milling", Chapter 7 "The purification process", by Elieser S. Posner and Arthur N. Hibbs (American Association of Cereal Chemists, Inc., St. Paul, Minnesota, USA, 1997).

Preferably, the fibre-containing oilseeds are deoiled prior to the separation of fibre. This has as the additional advantage that the oil yield can be increased as the hulls of oilseeds contain a substantial amount of the oil. The removal of oil from oilseeds is usually achieved either by 1) pressing, 2) pressing and then further solvent extraction of the oil or 3) only solvent extraction. In the case of solvent extraction, the solvent, usually hexane, is typically removed from the deoiled oilseeds in a desolventizer toaster where the oilseeds are heated up by steam. Typically, a drying and cooling process takes place after the removal of the hexane.

The fibre-containing oilseeds are preferably selected from the group consisting of rapeseed, sunflower, sesame, mustard, soybean, safflower, corn germ, flaxseed, and mixtures thereof. More preferably, the fibre-containing oilseed is rapeseed or sunflower, even more preferably rapeseed.

The fibre-containing oilseeds can be mechanically treated. The aim of this mechanical treatment is to loosen the bonds between protein and fibres of fibre-containing oilseeds. This can be achieved through different measures, e.g. by milling, flaking, popping, extruding or a combination of these. The mechanical treatment is preferably carried out using a mill. Suitable mills for this purpose are in particular hammer mills, impact mills, roller mills and a combination of these.

Furthermore, the fibre-containing oilseeds can be dried. One of the advantages of such a drying step is that fibres and kernels lose moisture at different rates. This leads to a difference in moisture levels between fibres and kernels. Such a difference in moisture levels improves the separation efficiency, particularly when the separation is carried out using an electrostatic separator. Suitable apparatuses for drying include but are not limited to drying ovens and fluidized beds.

The fibre-containing oilseeds can be additionally fractionated according to particle size. The fractionation of the fibre-containing oilseeds according to particle size is preferably carried out via the use of sieves.

Furthermore, the fibre-containing oilseeds can be treated by adjusting the moisture content to the range between 10 and 20% water by weight on dry basis, and then subsequently tempering at a temperature in the range between 0°C and 100°C, preferably 10°C and 80°C. Such a treatment can significantly change the particle size distribution obtained after a milling process when it is carried out before this milling process.

In a preferred embodiment, wherein the fibre-containing oilseed is deoiled rapeseed, the process comprises the steps:
a) collection of the particle size fraction of the fibre-containing oilseed between 250 µm and 1400 µm, preferably 340 µm and 1000 µm, more preferably 340 µm and 670 µm,
b) mechanical treatment of fraction,
c) further collection of the fraction between 250 µm and 600 µm, preferably 250 µm and 400 µm,
d) drying the fraction of step c) at 60°C for 5 minutes, followed by
e) electrostatic separation and/or sieving-wind sifting separation.

In another preferred embodiment, wherein the fibre-containing oilseed is deoiled rapeseed, the process further comprises between step a) & b) the step of adjusting the moisture content of the particle size fraction of the fibre-containing oilseed to the range between 10 and 20% water by weight on dry basis, and then subsequently tempering at a temperature in the range between 0°C and 100°C, preferably 10°C to 80°C.

A protein-enriched or fibre-enriched fraction in this context means a fraction that has a higher protein or fibre content than the initial fibre-containing oilseed from which it originates.

Preferably, fibre-reduced (= protein-enriched) fractions obtained according to the process of the present invention have a fibre content which is 20% or more reduced compared with the fibre content of the oilseed before the separation of fibre, more preferably 30% or more, most preferably 50% or more. The fibre content of the oilseeds is determined according to standard methods as described in the Foss Tecator Application Note AN 304, "Fibre Determination using the Fibertec I & M system", published on the 04/05/2005, and VVR bundel onderzoeksmethode diervoder deel III, "Bepaling van ruwe celstof", WM-5.1 - WM-5.4, published on the 01/09/1995.

The invention further relates to a protein-enriched fraction obtainable according to the process of the present invention.

The invention also relates to a protein-enriched rapeseed fraction derived from deoiled rapeseed obtainable according to the process of the present invention, wherein the fibre content of the deoiled rapeseed fraction is less than 10% by weight on dry basis and the protein content more than 35% by weight on dry basis. The protein contents of the oilseeds are determined according to the Kjeldahl method.

The invention further relates to a fibre-enriched fraction obtainable according to the process of the present invention.

The invention also relates to a fibre-enriched fraction derived from deoiled rapeseed obtainable according to the process of the present invention, wherein the fibre content of the rapeseed fraction is more than 20% by weight on dry basis and the protein content less than 30% by weight on dry basis. The fibre and protein content are determined as previously described.

The invention further relates to the use of protein- and/or fibre-enriched fractions obtained according to the present invention in animal feed and food. In particular, protein-enriched fractions obtained according to the present invention are suitable for use as aquafeed and/or petfood. Protein-enriched fractions can be employed for both ruminants and non-ruminants, fibre-enriched fractions are preferably used for ruminants. Fibre-enriched fractions can further be used in the production of fibre panels/particle boards or as fuel. Protein-enriched fractions can also be used as starting material in the production of protein concentrates and/or isolates.

The invention further particularly relates to the use of fibre- and protein-enriched fractions derived from deoiled rapeseeds for the previously mentioned applications.

### Examples

### Example 1

Deoiled rapeseeds were screened by sieving so as to obtain a fraction with particle sizes between 0.34 mm and 0.46 mm. This fraction was then dried at room temperature for three hours. The dried deoiled rapeseeds were then separated into three fractions using a conductive rotating drum electrostatic separator. The drum tangential speed of the rotating drum was adjusted to 2.37 meter/second and the voltage to 11.9 kilo Volt. This yielded the three fractions 1A, 1B and 1C. Fraction 1B was then again separated using the same electrostatic separator and settings yielding the three fractions 2A, 2B and 2C.

The results of the separation was as follows:

| Fraction | % product by weight on dry basis | % fibre by weight on dry basis | % protein by weight on dry basis |
|---|---|---|---|
| Original material | 100 | 11.7 | 39.1 |
| 1A | 7.8 | 9.8 | 42.9 |
| 1C | 27.5 | 16.6 | 33.4 |
| 2A | 9.1 | 8.4 | 43.4 |
| 2B | 51.4 | 9.4 | 41.6 |
| 2C | 4.3 | 19.5 | 30.1 |

### Example 2

Deoiled rapeseeds were screened by sieving so as to obtain a fraction with particle sizes between 0.34 mm and 0.46 mm. This fraction was dried overnight at room temperature. The fraction was then separated into four fractions A, B, C and D using conductive rotating drum electrostatic separator. The drum tangential speed of the rotating drum was adjusted to 2.37 meter/second and the voltage to 11.9 kilo Volt.

The results of the separation was as follows:

| Fraction | % product by weight on dry basis | % fibre by weight on dry basis | % protein by weight on dry basis |
|---|---|---|---|
| Original material | 100 | 10.0 | 40.8 |
| A | 7.7 | 7.5 | 44.1 |
| B | 69.1 | 8.2 | 42.9 |
| C | 12.8 | 11.9 | 37.9 |
| D | 10.4 | 21.1 | 28 |

### Example 3

Deoiled rapeseeds were screened by sieving so as to obtain a fraction with particle sizes between 0.67 mm and 0.99 mm. This fraction was then milled on a Buehler roller mill according to the following parameters:

| Roller 1 Revolutions/min. | Roller 2 Revolutions/min. | Difference (size) | Ripples No./circumference | Ripple form | Ripple % turn | Ripple position | Mill gap (mm) |
|---|---|---|---|---|---|---|---|
| 500 | 200 | 1:2.5 | 850 | F18 | 14 | S/S | 0.15 |

The milled fraction was then sieved to remove particles <0.315 mm. The fraction >0.315 mm was dried to reduce its moisture content from 7.9% water by weight on dry basis to 4.0% water by weight on dry basis. This fraction was then separated into three fractions (A, B, C) using a conductive rotating drum separator. The drum tangential speed of the rotating drum was adjusted to 2.37 meter/second and the voltage to 19.6 kilo Volt. Obtained fractions A and B were again mixed and separated electrostatically which yielded in additional fractions (D and E).

The results of the separation was as follows:

| Fraction | % product by weight on dry basis | % fibre by weight on dry basis | % protein by weight on dry basis |
|---|---|---|---|
| Original material | 100 | 21.5 | 28.0 |
| C | 15.6 | 26.4 | 21.2 |
| D | 65.6 | 19.3 | 31.3 |
| E | 4.7 | 25.1 | 22.3 |

### Example 4

Deoiled rapeseeds were screened by sieving so as to obtain a fraction with particle sizes between 0.46 mm and 0.67 mm. The fraction was then separated on a purifier where the separation is based on sieving-wind sifting separation exploiting the differences in size and density. Three fractions were obtained (A, B and C).

The results of the separation was as follows:

| Fractions | % product by weight on dry basis | % fibre by weight on dry basis |
|---|---|---|
| Original material | 100 | 14.7 |
| A | 6.6 | 23.0 |
| B | 48.1 | 17.1 |
| C | 45.2 | 10.9 |

### Example 5

Deoiled rapeseeds were screened by sieving so as to obtain a fraction with particle sizes between 0.46 mm and 0.67 mm. This fraction was then milled on a Buehler roller mill according to the following parameters:

| Roller 1 Revolutions/min. | Roller 2 Revolutions/min. | Difference (size) | Ripples No./circumference | Ripple form | Ripple % turn | Ripple position | Mill gap (mm) |
|---|---|---|---|---|---|---|---|
| 500 | 200 | 1:2.5 | 850 | F18 | 14 | S/S | 0.15 |

The gap width of the roll A was adjusted to 0.15 mm. The fraction was then separated on a purifier where the separation is based on sieving-wind sifting separation exploiting the differences in size and density. Two fractions were obtained (A and B).

The results of the separation was as follows:

| Fractions | % fibre by weight on dry basis |
|---|---|
| Original material | 15.8 |
| A | 23.5 |
| B | 14.3 |

## Claims

1. A process for separating fibre-containing oilseeds into oilseed fractions with different fibre content **characterised in that** the separation is carried out by electrostatic separation and/or by sieving-wind sifting separation, preferably electrostatic separation.

2. The process according to claim 1, wherein the fibre-containing oilseeds are deoiled.

3. The process according to claim 1 or 2, wherein the fibre-containing oilseeds are selected from the group consisting of rapeseed, sunflower, sesame, mustard, soybean, corn germ, flaxseed, and mixtures thereof, preferably rapeseed.

4. The process according to any one of claims 1 to 3, further comprising a mechanical treatment to loosen the bonds between protein and fibres of fibre-containing oilseeds.

5. The process according to claim 4, wherein the mechanical treatment is carried out using a mill.

6. The process according to claim 5, wherein the mill is selected from the group consisting of hammer mill, impact mill, roller mill, and a combination of these.

7. The process according to any one of claims 1 to 6, further comprising a drying step.

8. The process according to any one of claims 1 to 7, further comprising fractionation of the fibre-containing oilseeds according to particle size.

9. The process according to claim 8, wherein the fractionation according to particle size is carried out by sieving.

10. The process according to any one of claims 1 to 9, further comprising adjusting the moisture content of the fibre-containing oilseeds to the range between 10 and 20% water by weight on dry basis, and subsequently tempering at a temperature in the range between 0°C and 100°C, preferably 10°C and 80°C.

11. The process according to any one of claims 1 to 10, wherein the electrostatic separation is carried out using a conductive rotating drum electrostatic separator.

12. The process according to claim 11, wherein the electrostatic separation is carried out with a drum tangential speed within the range of 1.5 to 3 meter/second, preferably 1.9 to 2.8 meter/second, more preferably 2.3 to 2.4 meter/second.

13. The process according to claim 11 or 12, wherein the electrostatic separation is carried out at a voltage within the range of 5 and 40 kilo Volt, preferably in the range of 11 and 28 kilo Volt.

14. The process according to any one of claims 1 to 13, wherein the fibre-containing oilseeds are separated into two or more fractions, of which at least one is a fibre-reduced (protein-enriched) fraction having a 20% or more reduced fibre content compared with the fibre content of the oilseed before separation, preferably 30% or more, most preferably 50% or more.

15. The process according to any one of claims 1 to 14, wherein the fibre-containing oilseed is deoiled rapeseed, comprising the steps
a) collection of the particle size fraction of the fibre-containing oilseed between 250 µm and 1400 µm, preferably 340 µm and 1000 µm, more preferably 340 µm and 670 µm,
b) mechanical treatment of the fraction,
c) further collection of the fraction between 250 µm and 600 µm, preferably 250 µm and 400 µm,
d) drying the fraction of step c) at 60°C for 5 minutes, followed by
e) electrostatic separation and/or sieving-wind sifting separation.

16. The process according to claim 15, further comprising between step a) & b) the step of adjusting the moisture content of the particle size fraction obtained to the range between 10 and 20% water by weight on dry basis, and then subsequently tempering at a temperature in the range between 0°C and 100°C, preferably 10°C to 80°C.

17. A protein-enriched oilseed fraction obtainable according to the process of any one of claims 1 to 16.

18. The protein-enriched oilseed fraction according to claim 17 wherein the oilseed is deoiled rapeseed and the fibre content is less than 10% by weight on dry basis and the protein content more than 35% by weight on dry basis.

19. A fibre-enriched oilseed fraction obtainable according to the process of any one of claims 1 to 16.

20. The fibre-enriched oilseed fraction according to claim 19, wherein the oilseed is deoiled rapeseed and the fibre content is more than 20% by weight on dry basis and the protein content less than 30% by weight on dry basis.

21. Use of a protein-enriched oilseed fraction according to claim 17 or 18 in animal feed and food.

22. Use according to claim 21, wherein the feed is for non-ruminants and/or ruminants.

23. Use of a fibre-enriched oilseed fraction according to claim 19 or 20 in animal feed and food.

24. Use according to claim 23, wherein the feed is for ruminants.

25. Use according to claim 21, wherein the feed is aquafeed and/or petfood.

26. Use of a fibre-enriched oilseed fraction according to claim 19 or 20 in particle boards/fibre panels.

27. Use of a fibre-enriched oilseed fraction according to claim 19 or 20 as fuel.

28. Use of a protein-enriched oilseed fraction according to claim 19 or 20 in the production of protein concentrates and/or isolates.
